(19) **Europäisches Patentamt**
**European Patent Office**
**Office européen des brevets**

(11) Veröffentlichungsnummer: **0 658 947 A1**

(12) **EUROPÄISCHE PATENTANMELDUNG**

(21) Anmeldenummer: **94116439.4**

(51) Int. Cl.6: **H01M 4/52**, H01M 10/34

(22) Anmeldetag: **19.10.94**

(30) Priorität: **18.12.93 DE 4343322**

(43) Veröffentlichungstag der Anmeldung:
**21.06.95 Patentblatt 95/25**

(84) Benannte Vertragsstaaten:
**BE DE FR GB NL PT**

(71) Anmelder: **VARTA Batterie Aktiengesellschaft**
**Am Leineufer 51**
**D-30419 Hannover (DE)**

(72) Erfinder: **Lichtenberg, Frank, Dr.**

Hauptstrasse 74
**D-67378 Zeiskam (DE)**
Erfinder: **Kleinsorgen, Klaus**
**Ruppertshainer Strasse 21**
**D-65779 Kelkheim (DE)**
Erfinder: **Hofmann, Günter**
**Brückenstrasse 16**
**D-65719 Hofheim (DE)**

(74) Vertreter: **Kaiser, Dieter Ralf, Dipl.-Ing.**
**Gundelhardtstrasse 72**
**D-65779 Kelkheim (DE)**

(54) **NI/Metallhydrid-Sekundärelement.**

(57) Während konventionelle Ni/Metallhydrid-Knopfzellen, deren positive Pulverpreßelektroden aus einem Gemisch von $Ni(OH)_2$, Ni-Pulver sowie Oxidverbindungen des Kobalts hergestellt sind, durch einen in eine Zyklenbehandlung nach n = 6 Zyklen eingeschalteten verschärften Hochtemperatur-Lagerungstest bei 65°C eine massive irreversible Kapazitätseinbuße erleiden (Kurve 1), zeigen die gleichen Knopfzellen einen kleineren und nur vorübergehenden Kapzitätsschwund, wenn der positiven Massemischung zusätzlich 0,1 bis 15% Mangan und/oder Manganoxide zugesetzt sind (Kurve 2). Der Manganzusatz verhindert vermutlich die reduktive Zerstörung eines zuvor gebildeten leitenden CoOOH-Gerüsts unter den Bedingungen der Hochtemperatur-Lagerung, indem er diese stabilisiert oder seine Regenerationsfähigkeit fördert.

Sekundärzellen von Ni/Metallhydrid-Typ verwenden eine negative Elektrode, die Wasserstoff elektrochemisch speichern kann, und eine positive Elektrode, die auch in konventionellen Sekundärbatterien, etwa dem Ni/Cd-Akkumulator, eingesetzt wird. Positive und negative Elektrode sind in einem alkalischen Elektrolyten voneinander getrennt angeordnet. Beim Anlegen eines elektrischen Stromes an die negative Elektrode wird deren aktives Material, ein zur Wasserstoffaufnahme befähigtes Metall M durch die Absorption von Wasserstoff aufgeladen:

$$M + H_2O + e^- \rightarrow M\text{-}H + OH^-$$

Bei der Entladung wird der gespeicherte Wasserstoff freigesetzt, so daß ein elektrischer Strom erzeugt wird:

$$M\text{-}H + OH^- \rightarrow M + H_2O + e^-$$

Beide Reaktionen sind reversibel.

Entsprechendes gilt für die an der positiven Nickelhydroxid-Elektrode stattfindenden Reaktionen

Aufladen: $Ni(OH)_2 + OH^- \rightarrow NiOOH + H_2O + e^-$
Entladen: $NiOOH + H_2O + e^- \rightarrow Ni(OH)_2 + OH^-$

Wegen des umweltfreundlichen Energieträgers Wasserstoff, der hier in Verbindung mit der bewährten, prinzipiell gleichen positiven Elektrode des Ni/Cd-Akkumulators eingesetzt wird, bieten Ni/Metallhydrid-Batterien bereits heute gegenüber konventionellen Sekundärbatterien deutliche Vorteile.

Ni/Metallhydrid-Batterien sind gasdicht, wartungsfrei und erreichen dank einer weit vorangeschrittenen Technik für die Elektrodenherstellung bereits Energiedichten um 50Wh/kg. Dabei spielt die Qualität der positiven Elektrode, da sie kapazitätsbegrenzend ist, eine besonders wichtige Rolle.

Nach derzeitigem Standard, z.B. gemäß US-PS 4935318, werden als positive aktive Masse Nickelhydroxid, Nickelmetallpulver, Kobaltmetallpulver, gewisse Fremdhydroxide, insbesondere $Co(OH)_2$, sowie ein Bindemittel trocken gemischt. Die Mischung wird darauf mit Wasser zu einer Paste angeteigt und diese in eine hochporöse dreidimensionale Nickelmatrix eingestrichen.

Ein Kobalthydroxidzusatz zur positiven Masse dient der Erzeugung eines notwendigen Kapazitätsüberschusses auf Seiten der negativen Hydridelektrode als Entladereserve. Da $Co(OH)_2$ ein niedrigeres Oxidationspotential als $Ni(OH)_2$ besitzt, werden beim ersten Aufladen der noch unverschlossenen Zelle vor der Umwandlung des $Ni(OH)_2$ zu NiOOH höhere Kobaltoxide ($Co_2O_3$) gebildet, so daß die negative Elektrode eine diesem Strommengenaufwand entsprechende Vorladung erhält. Die Kobaltoxide bleiben danach stabil, so daß die negative Elektrode, wenn nach anschließender Entladung die Nutzkapazität der positiven Elektrode bereits ausgeschöpft ist, die negative Elektrode aufgrund der Vorladung noch eine Entladereserve aufweist. Kobaltoxide sind außerdem elektronenleitend und beeinflussen das Kapazitätsverhalten der Masse günstig.

Ein ernstes Problem bereiten die meisten marktgängigen Nickel/Hydrid-Zellen, ob Rundzellen, prismatische Zellen oder solche vom Knopfzellentyp, allerdings dadurch, daß sie einem Hochtemperatur-Lagerungstest (HTSC, High Temperature Short Circuit), der von den Batteriekunden aus der Industrie eingeführt wurde, in der Regel nicht standhalten. Dieser Test ist durch folgende Bedingungen charakterisiert:

Durch einige Inbetriebsetzungszyklen konditionierte Zellen werden im entladenen Zustand über einen Widerstand von 2W kurzgeschlossen und 3 Tage bei 65 °C gelagert. Anschließend wird die Zyklenbehandlung bei Raumtemperatur fortgesetzt und die verbliebene Kapazität bestimmt. Gewöhnlich zeigt sich dabei ein massiver irreversibler Kapazitätsverlust.

Der Erfindung liegt daher die Aufgabe zugrunde, ein alkalisches Sekundärelement von Ni/Metallhydrid-Typ verfügbar zu machen, welches sich den besagten Testbedingungen gewachsen zeigt.

Die Aufgabe wird erfindungsgemäß mit einem Sekundärelement gelöst, wie es in Patentanspruch 1 definiert ist.

Danach wird die Kapazitätseinbuße mittels einer veränderten Zusammensetzung der positiven aktiven Masse überwunden, wobei vorgesehen ist, daß die überwiegend, d.h. zu mehr als 50% aus Ni-$(OH)_2$ bestehende Massemischung neben bisher üblichen Zusätzen von Kobaltmetallpulver und oxidischen Verbindungen des Kobalts, z.B. CoO, gleichzeitig, sowohl einzeln als auch untereinander gemischt, metallisches Mangan oder Oxidverbindungen des Mangans enthält. Als Oxidverbindungen kommen beliebige Manganoxide $MnO_x$, z.B. Braunstein, $MnO_2$ ($x = 2$), aber auch wässerige Derivate von Manganoxiden, $MnO_yH_z$, infrage. Bei diesen kann es sich, wenn $y = z$, um beliebige Manganhydroxide, im Falle $y \neq z$ um beliebige Oxidhydrate des Mangans, z.B. $\gamma$-MnOOH, Manganit, handeln.

Auch ternäre Alkalimetall-Manganoxide bilden geeignete Zusätze. Zu dieser Gruppe zählen z.B. Lithium-Manganspinelle vom Typ $Li_xMn_2O_4$,

Weiterhin sind in der Massemischung der positiven Elektrode meistens Nickelpulver als Leitmaterial sowie als Bindemittel z.B. PTFE zugegen.

Außer dem erfindungsgemäßen Zusatz des Mangans und/oder seiner Oxidverbindungen zu der kobalthaltigen positiven Nickelhydroxidmasse sind Zusätze weiterer Fremdmetalle wie Zn, Cd und Sn, vorzugsweise in Form oxidischer Verbindungen, günstig.

Der Gewichtsanteil aller kobalthaltigen Bestandteile an der Massemischung insgesamt sollte erfindungsgemäß 0,1 bis 15% und der Gewichtsanteil aller manganhaltigen Bestandteile an der Massemischung ebenfalls 0,1 bis 15% betragen. Letzterer Anteil schließt gegebenenfalls vorhandene Oxidverbindungen von Zn, Cd, Sn sowie die Metalle selbst mit ein.

Die Oxide des Mangans sowie der übrigen genannten Metalle sind ebenso wie deren Hydroxide und Oxihydroxide elektrisch leitend und/oder gehen durch elektrochemische Behandlung in höher- bzw. niederwertige Oxidationsformen über, ohne daß sich die Eigenschaften der positiven Elektrode dadurch nennenswert verschlechtern.

Der Erfolg der erfindungsgemäßen Maßnahme spricht dafür, daß für die durch den Hochtemperatur-Lagerungstest ausgelöste Kapazitätseinbuße die positive Elektrode verantwortlich ist. Unter den genannten Testbedingungen kann das Potential der positiven Elektrode zu negativeren Werten hin abgleiten, und das elektrische Leitgerüst, welches aus einer elektrochemisch aufgebauten Verbindung vom Typ CoOOH besteht, wird reduktiv zerstört. Der Zerstörung wirkt der manganhaltige Zusatz zur Massemischung offenbar durch Stabilisierung oder Verbesserung der Regenerationsfähigkeit des Leitgerüstes CoOOH entgegen. Ein Hinweis für diesen möglichen "Mangan-Effekt" ergibt sich aus dem nachstehenden Versuch an Knopfzellen, die wegen ihrer leichten Montierbarkeit als beispielhaft für beliebige Ni/Metallhydridzellen ausgewählt wurden.

Für Zellen dieses Typs wurden positive Elektroden aus einer Mischung von 60Gew.% $Ni(OH)_2$, 9Gew.% CoO, 1Gew.% Co, 27Gew.% Ni und 3Gew.% $MnO_2$ in der üblichen Technik als Preßpulvertabletten mit Nickelgewebeumhüllung hergestellt. Auf gleiche Weise hergestellte Vergleichselektroden gemäß dem Stand der Technik enthielten kein $MnO_2$, dafür 3Gew.% mehr Ni.

Alle positiven Elektroden wurden vor der Zellmontage für ca. 20h bei 80°C in Co-haltiger Lauge (KOH) gelagert.

Nach dem Einbau zusammen mit negativen Elektroden aus einem wasserstoffspeichernden und ebenfalls zu Tabletten verpreßten Legierungspulver wurden die erfindungsgemäßen "Mangan-Zellen" und die "Standardzellen" in Betrieb gesetzt und nach dem 6. Zyklus dem HTSC-Test unterworfen. Nach dem HTSC-Test wurde die Zyklenbehandlung über weitere 5 Zyklen unter den Anfangsbedingungen fortgesetzt, wobei der Lade- und Entladestrom stets 50mA und die Entladeschlußspannung 0,7V betrugen.

Eine Figur zeigt die Kapazitätsentwicklung bei beiden Zellengruppen, wobei die Kapazität C[Ah] in Abhängigkeit von der Zyklenzahl n durch zwei Kurven dargestellt ist. Beide Kurven sind jeweils aus den Meßdaten von 6 Zellen aus der einen und der anderen Gruppe gemittelt.

Wie ersichtlich, hat der HTSC-Test für die Standardzellen (Kurve 1) einen gravierenden Kapazitätsrückgang zur Folge, von dem sie sich im weiteren Verlauf der Zyklenbehandlung nicht mehr erholen.

Hingegen fällt ein Kapazitätseinbruch bei den erfindungsgemäßen "Mangan-Zellen" nicht nur geringfügiger aus, sondern es findet innerhalb 2 bis 3 Folgezyklen auch eine Erholung statt, bei der die ursprüngliche Kapazität wieder erreicht wird.

Eine abgesicherte Erklärung dieses "Mangan-Effekts" ist z.Z. noch nicht möglich. Offenbar bleiben bei Abwesenheit von Mangan in konventionellen Ni/Metallhydrid-Sekundärzellen die ursprünglich gebildeten höheren Kobaltoxide, die kapazitätssteigernd wirken unter den speziellen Bedingungen des HTSC-Tests nicht stabil, sondern werden teilweise zu metallischem Co reduziert. Mangan verhindert möglicherweise diese Reduktion, indem es aufgrund seines verbliebenen Oxidationspotentials die Wiederherstellung des CoOOH fördert.

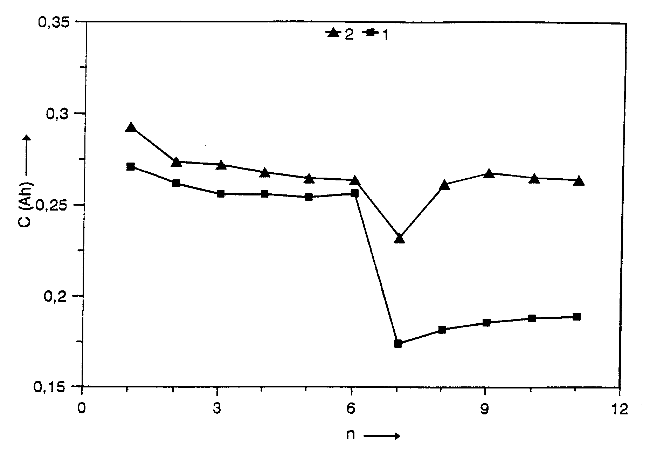

## Patentansprüche

1. Ni/Metallhydrid-Sekundärelement mit einer positiven Nickelhydroxidelektrode, einer negativen Elektrode, die eine Wasserstoffspeicherlegierung umfaßt, und einem alkalischen Elektrolyten, dadurch gekennzeichnet, daß die mit einem dreidimensionalen metallischen Leitgerüst versehene und überwiegend aus Nickelhydroxid bestehende aktive Masse der positiven Elektrode neben Zusätzen von Kobalt und/oder Oxidverbindungen des Kobalts Zusätze von Mangan und/oder von Oxidverbindungen des Mangans und/oder von ternären Alkalimetall-Manganoxiden enthält.

2. Ni/Metallhydrid-Sekundärelement nach Anspruch 1, dadurch gekennzeichnet, daß die Oxidverbindungen des Mangans Manganoxide der Zusammensetzung $MnO_x$ sind.

3. Ni/Metallhydrid-Sekundärelement nach Anspruch 1 oder 2, dadurch gekennzeichnet, daß die Oxidverbindungen des Mangans Manganhydroxide der Zusammensetzung $MnO_yH_z$ mit $y = z$ sind.

4. Ni/Metallhydrid-Sekundärelement nach einem der Ansprüche 1 bis 3, dadurch gekennzeichnet, daß die Oxidverbindungen des Mangans Manganoxihydroxide oder Manganoxidhydrate der Zusammensetzung $MnO_yH_z$ mit $y \neq z$ sind.

5. Ni/Metallhydrid-Sekundärelement nach einem der Ansprüche 1 bis 4, dadurch gekennzeichnet, daß die Oxidverbindungen ternäre Alkali-Manganoxide sind.

6. Ni/Metallhydrid-Sekundärelement nach einem der Ansprüche 1 bis 5, dadurch gekennzeichnet, daß die Massemischung der positiven Elektrode zusätzlich Oxidverbindungen der Elemente Cd, Zn und Sn enthält.

7. Ni/Metallhydrid-Sekundärelement nach einem der Ansprüche 1 bis 6, dadurch gekennzeichnet, daß das metallische Leitgerüst der positiven Elektrode aus Nickelpulver oder einem vernickelten Substrat gebildet ist.

8. Ni/Metallhydrid-Sekundärelement nach einem der Ansprüche 1 bis 7, dadurch gekennzeichnet, daß der Elektrodenmasse ein Bindemittel zugemischt ist.

9. Ni/Metallhydrid-Sekundärelement nach einem der Ansprüche 1 bis 8, dadurch gekennzeichnet daß der Gewichtsanteil aller kobalthaltigen Zusätze an der gesamten Masse der positiven Elektrode 0,1 bis 15% und der Gewichtsanteil der manganhaltigen Zusätze einschließlich der zusätzlichen Oxidverbindungen ebenfalls 0,1 bis 15% beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | EP-A-0 587 974 (MATSUSHITA ELECTRIC IND CO LTD ) 23.März 1994<br>* Seite 4, Zeile 12 - Zeile 16; Ansprüche 1,4,5 *<br>* Seite 5, Zeile 10 - Zeile 36 *<br>* Seite 6, Zeile 19 - Zeile 23; Beispiel 3 *<br>* Tabelle 1 *<br>--- | 1,2,6,9 | H01M4/52<br>H01M10/34 |
| X | EP-A-0 460 425 (VARTA BATTERIE ) 11.Dezember 1991<br>* Seite 2, Zeile 54 - Seite 3, Zeile 4; Ansprüche 1-3,5,7 *<br>--- | 1,3,7,8 | |
| X | CHEMICAL ABSTRACTS, vol. 117, no. 26, 28.Dezember 1992<br>Columbus, Ohio, US;<br>abstract no. 254896m,<br>YUASA KOJI ET AL 'Cathodes for secondary alkaline batteries'<br>* Zusammenfassung *<br>& JP-A-04 179 056 (MATSUSHITA ELECTRICAL INDUSTRIAL CO) 25.Juni 1992<br>--- | 1 | |
| X | CHEMICAL ABSTRACTS, vol. 118, no. 26, 28.Juni 1993<br>Columbus, Ohio, US;<br>abstract no. 258090n,<br>AKUTSU TOKUKATSU ET AL 'Nickel cathodes for secondary alkaline batteries and nickel-hydrogen batteries using the cathodes'<br>* Zusammenfassung *<br>& JP-A-05 028 992 (MATSUSHITA ELECTRIC INDUSTRIAL CO) 5.Februar 1993<br>---<br>-/-- | 1 | |

RECHERCHIERTE SACHGEBIETE (Int.Cl.6)

H01M

Der vorliegende Recherchenbericht wurde für alle Patentansprüche erstellt

| Recherchenort | Abschlußdatum der Recherche | Prüfer |
|---|---|---|
| DEN HAAG | 8.März 1995 | D'hondt, J |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | CHEMICAL ABSTRACTS, vol. 121, no. 12, 19.September 1994 Columbus, Ohio, US; abstract no. 137522, KITAGAWA KIMIE ET AL 'Manufacture of nickel cathodes for secondary alkaline batteries and secondary alkaline batteries containing the cathodes' * Zusammenfassung * & JP-A-06 150 925 (MATSUSHITA ELECTRIC IND CO) 31.Mai 1994 --- | 1,2,6,9 | |
| A | PATENT ABSTRACTS OF JAPAN vol. 017 no. 480 (E-1425) ,31.August 1993 & JP-A-05 121073 (JAPAN STORAGE BATTERY CO LTD) 18.Mai 1993, * Zusammenfassung * --- | 1 | |
| A | EP-A-0 523 284 (MATSUSHITA ELECTRIC IND CO LTD ) 20.Januar 1993 * Ansprüche 33-35,38,40; Beispiel 3; Tabelle 3 NR 10 * --- | 1,6-8 | |
| A | PATENT ABSTRACTS OF JAPAN vol. 016 no. 352 (E-1241) ,29.Juli 1992 & JP-A-04 109556 (HITACHI CHEM CO LTD) 10.April 1992, * Zusammenfassung * & CHEMICAL ABSTRACTS, vol. 117, no. 12, 21.September 1992 Columbus, Ohio, US; abstract no. 115208a, HORIBA TATSUO ET AL 'Sealed secondary hydrogen batteries with improved cathodes' * Zusammenfassung * --- -/-- | 1 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 8.März 1995 | D'hondt, J |

Europäisches Patentamt

# EUROPÄISCHER RECHERCHENBERICHT

Nummer der Anmeldung

EP 94 11 6439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CHEMICAL ABSTRACTS, vol. 90, no. 18, 30.April 1979 Columbus, Ohio, US; abstract no. 143554c, OHSAKI TAKAHISA ET AL 'Nickel active material for alkali batteries' * Zusammenfassung * & JP-A-54 004 334 (TOKYO SHIBAURA ELECTRIC CO) 13.Januar 1979 --- | 1 | |
| A | CHEMICAL ABSTRACTS, vol. 100, no. 26, 25.Juni 1984 Columbus, Ohio, US; abstract no. 213036, JAPAN STORAGE BATTERY CO 'Cathodes for alkaline batteries' * Zusammenfassung * & JP-A-59 016 269 (JAPAN STORAGE BATTERY CO) 27.Januar 1984 --- | 1 | |
| P,A | WO-A-94 19939 (OVONIC BATTERY CO ) 15.September 1994 * Seite 19, Zeile 6 - Zeile 8; Ansprüche 15-18 * ----- | 1 | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 8.März 1995 | D'hondt, J |

EPO FORM 1503 03.82 (P04C03)